# EUROPÄISCHE PATENTANMELDUNG

(11) **EP 2 301 410 A2**
(43) Veröffentlichungstag der Anmeldung: **30.03.2011**
(21) Anmeldenummer: 10179552.4
(22) Anmeldetag: 24.09.2010
(51) Int. Cl.: A47L 25/00

(54) **Reinigungsvorrichtung für einen Bildschirm**

(30) Priorität: 28.09.2009 DE 102009043046
(71) Anmelder: Falkenstern, Angelika, 51103 Köln (DE)
(72) Erfinder: Falkenstern, Angelika, 51103 Köln (DE)
(74) Vertreter: Fritz, Edmund Lothar

(57) **Zusammenfassung**

Die vorliegende Erfindung betrifft eine Reinigungsvorrichtung für einen Bildschirm (12) eines elektronischen Geräts, wie beispielsweise eines Mobiltelefons, eines Kleincomputers oder dergleichen, umfassend ein Reinigungselement (13) mit wenigstens einer Reinigungsschicht, ein Befestigungselement(15) zur Anbringung an dem elektronischen Gerät (11) und ein Verbindungselement (14), welches Reinigungselement und Befestigungselement miteinander verbindet. Erfindungsgemäß dient als Befestigungselement ein Steckverbinder (15), geeignet zum lösbaren Einstecken in eine am elektronischen Gerät (11) vorhandene Stecköffnung. Dadurch hat man die Möglichkeit, eine vorhandene Öffnung, zum Beispiel einen Audioeingang oder einen Ladesteckereingang des Geräts für die Anbringung der Reinigungsvorrichtung zu nutzen, denn an vielen Geräten sind Ösen oder ähnliches für die Anbringung nicht vorhanden.

## Beschreibung

Die vorliegende Erfindung betrifft eine Reinigungsvorrichtung für einen Bildschirm eines elektronischen Geräts, wie beispielsweise eines Mobiltelefons, eines Kleincomputers oder dergleichen, umfassend ein Reinigungselement mit wenigstens einer Reinigungsschicht, ein Befestigungselement zur Anbringung an dem elektronischen Gerät und ein Verbindungselement, welches Reinigungselement und Befestigungselement miteinander verbindet.

Aus dem Stand der Technik sind Reinigungsvorrichtungen der vorgenannten Art bekannt geworden, welche man an dem elektronischen Gerät befestigen kann, so dass sie stets zur Reinigung des Bildschirms des Geräts an diesem verfügbar sind. Beispielsweise beschreibt das Gebrauchsmuster DE 20 2007 005 000 U1 eine derartige Reinigungsvorrichtung, welche aus einem Trägerelement aus einem steifen Material besteht mit einem daran angeordneten Kissen aus Vliesstoff. Um diese Reinigungsvorrichtung an dem elektronischen Gerät zu befestigen, ist an dem Trägerelement eine Öse vorgesehen, durch die eine Kordel gezogen wird, welche an ihrem anderen Ende an einer an dem Gerät angebrachten Öse befestigt wird. Ein Problem bei dieser bekannten Lösung liegt darin, dass an vielen elektronischen Geräten eine solche Öse für die Anbringung einer Kordel nicht vorhanden ist. Zudem kann es sein, dass der Benutzer des Geräts nicht wünscht, dass die Reinigungsvorrichtung immer an dem Gerät angebracht ist. Schließlich ist bei bekannten Reinigungsvorrichtungen dieser Art auch problematisch, dass diese bei der Reinigung versehentlich mit der starren Trägerschicht mit dem Bildschirm in Berührung kommen kann, so dass dieser verkratzt wird.

Eine ähnliche Reinigungsvorrichtung ist aus der DE 20 2005 004 366 U1 bekannt. Dort wird ein Bildschirmputzer mit einer gewebten Textilschicht oder einer Kunstlederschicht für die Reinigung des Bildschirmes eines Mobiltelephons oder einer Digitalkamera beschrieben, wobei dieser eine Trägerschicht aus einem weichen Kunststoff aufweist sowie eine Gewebeschicht, die sich an der Rückseite der Trägerschicht befindet und an den Rändern mit dem Trägermaterial verbunden ist. Hier wird ein Federelement aus dehnbarem Kunststoff verwendet, welches mittels eines Metallrings an einer Garnschleife befestigt ist. Über die Garnschleife soll die Vorrichtung an einem Mobiltelefon oder einem Schlüsselanhänger befestigbar sein. Hier bestehen im Prinzip die gleichen Nachteile wie sei bereits oben erwähnt sind.

In der DE 100 45 491 A1 ist eine Befestigungsöse für Mobiltelefone beschrieben, die entweder an dem Mobiltelefon bereits angebracht sein muss oder an diesem lösbar angebracht wird und der Aufnahme eines Ringes dient, der seinerseits mit einer Kette oder Schnur mit Handschlaufe verbunden ist. Diese Vorrichtung dient jedoch zur Sicherung des Mobiltelefons gegen Herunterfallen oder Verlust und ist nicht für die Anbringung einer Reinigungsvorrichtung vorgesehen. Die genannte Öse ist bei vielen Mobiltelefon-Modellen nicht vorhanden und muss daher erst angebracht werden, was vergleichsweise umständlich ist und auch von manchen Benutzern aus ästhetischen Gründen nicht akzeptiert wird.

Das Koreanische Patent Abstract 1020030082520 A beschreibt einen ähnlichen Bildschirmreiniger wie bereits oben beschrieben. Dort ist ein Trägerkörper mit einer Reinigungseinheit über eine dazwischen liegende Pad-Schicht verbunden. Auch hier wird eine Art Kordel verwendet, um die Reinigungsvorrichtung in nicht näher bezeichneter Weise mit einem Mobilfunktelefon zu verbinden.

Einige der bekannten Reinigungsvorrichtungen für Bildschirme von elektronischen Geräten der vorgenannten Art haben zudem den Nachteil, dass die Reinigungsschicht aus einem zu harten Material besteht, wodurch die Gefahr gegeben ist, dass man mit der Reinigungsschicht den Bildschirm versehentlich verkratzt oder beschädigt.

Ausgehend von dem vorgenannten Stand der Technik besteht die Aufgabe der vorliegenden Erfindung darin, eine Reinigungsvorrichtung für einen Bildschirm eines elektronischen Geräts der eingangs genannten Gattung zur Verfügung zu stellen, bei der in einfacher Weise eine bei Bedarf lösbare Verbindung mit dem elektronischen Gerät hergestellt werden kann.

Die Lösung dieser Aufgabe liefert eine Reinigungsvorrichtung für einen Bildschirm der eingangs genannten Art mit den kennzeichnenden Merkmalen des Schutzanspruchs 1.

Erfindungsgemäß ist vorgesehen, dass als Befestigungselement ein Steckverbinder vorgesehen ist, geeignet zum lösbaren Einstecken in eine am elektronischen Gerät vorhandene Stecköffnung. Die genannte Stecköffnung am elektronischen Gerät kann insbesondere eine an diesem serienmäßig vorhandene Stecköffnung sein. Dies hat den Vorteil, dass man die erfindungsgemäße Reinigungsvorrichtung an einem handelsüblichen elektronischen Gerät verwenden kann, ohne dieses konstruktiv zu verändern. Nimmt man die Reinigungsvorrichtung ab, unterscheidet sich das Gerät nicht von einem herkömmlichen Gerät dieses Typs. Dies hat den Vorteil, dass Änderungen an dem Gerät, wie beispielsweise die Anbringung einer Öse oder dergleichen, herstellerseitig nicht erforderlich sind. Zudem bleibt das optische Erscheinungsbild des Geräts für den Anwender unverändert.

Gleichwohl schafft die erfindungsgemäße Lösung aber die Möglichkeit, nach Anbringung des Befestigungselements in der Stecköffnung, die Reinigungsvorrichtung so mit dem elektronischen Gerät zu verbinden, dass sie stets am Gerät verfügbar ist und nicht verloren werden kann. Da jedoch die Verbindung durch einfaches Herausziehen des steckbaren Befestigungselements aus der Stecköffnung mit einem Handgriff lösbar ist, muss der Benutzer die Reinigungsvorrichtung somit nicht ständig an dem Gerät mitführen.

Die Stecköffnung an dem elektronischen Gerät kann beispielsweise eine Steckbuchse für einen Audio-Stecker, eine Steckbuchse für ein Kabel eines Ladegeräts, eine Steckbuchse für ein Kabel eines anderen an das elektronische Gerät anschließbaren elektrischen oder elektronischen Zubehörgeräts, beispielsweise eines Kopfhörers, eine USB-Steckbuchse oder dergleichen ist. Eine oder mehrere Stecköffnungen/Steckbuchsen dieser Art sind eigentlich immer an einem elektronischen Gerät der in Rede stehenden Art wie einem Mobiltelefon, MP3-Player, Kleincomputer oder dergleichen vorhanden, so dass man diese Stecköffnung nutzen kann, um dort das Befestigungselement der erfindungsgemäßen Reinigungsvorrichtung einzustecken. Es ist somit keinerlei bauliche Veränderung des elektronischen Geräts notwendig.

Bevorzugt ist es so, dass der als Befestigungselement vorgesehene Steckverbinder rastend oder klemmend in einer Steckbuchse des elektronischen Geräts festlegbar ist. Man kann beispielsweise einen Klinkenstecker verwenden oder aber auch jeglichen anderen üblichen Steckertyp, der am Markt üblicherweise für Zusatzgeräte der oben genannten Art verwendet wird, mit der Maßgabe, dass der erfindungsgemäße Stecker nur einem echten Stecker nachgebildet ist, aber natürlich keine elektrische Verbindung herstellt. Der Stecker ist vielmehr zum Beispiel an einer Schnur, einer Kordel, einem Gummi oder dergleichen befestigt und somit darüber unverlierbar mit dem Reinigungselement der Reinigungsvorrichtung verbunden.

Ein weiteres Anliegen der vorliegenden Erfindung ist es, eine Reinigungsvorrichtung der vorgenannten Art zur Verfügung zu stellen, welche ein möglichst schonendes Reinigen des Bildschirms ermöglicht, ohne die Gefahr, diesen zu beschädigen oder zu verkratzen. Dazu ist bevorzugt vorgesehen, dass das Reinigungselement eine wieche textile Reinigungsoberfläche an einem flexiblen Träger aufweist, welcher ebenfalls aus einem textilen Material gefertigt ist. Selbst wenn man somit versehentlich mit einem Teil außerhalb der Reinigungsoberfläche den Bildschirm berührt, führt dies nicht zu einem Verkratzen. Dies ist ein weiterer Vorteil gegenüber den bekannten Lösungen, bei denen ein vergleichsweise hartes Trägermaterial verwendet wird und nur das Reinigungspad selbst weicher ist.

Besonders vorteilhaft ist es, wenn beispielsweise die textile Reinigungsoberfläche und der textile flexible Träger einstückig aus einem textilen Material gefertigt, vorzugsweise genäht sind. Es kann beispielsweise auch so sein, dass die Reinigungsvorrichtung beidseitig eine weiche, insbesondere textile Reinigungsoberfläche aufweist. Mit anderen Worten die weiche Reinigungsoberfläche und der Träger unterscheiden sich nicht hinsichtlich der Materialien. Man kann beispielsweise ein Reinigungspad aus einem textilen Material verwenden, welches vorderseitig und rückseitig eine weiche Reinigungsoberfläche aufweist. Die Herstellung eines solchen Reinigungspads in einem Nähvorgang bietet sich an. Es kann aber auch beispielsweise ein Vlies-artiges Material für das Reinigungselement verwendet werden. Gegenüber bekannten Lösungen besteht der Vorteil darin, dass man nicht bei der Reinigung den Bildschirm mit der falschen Seite berühren und dadurch verkratzen kann. Vielmehr sind Vorderseite und Rückseite des Reinigungselements funktional identisch und können beide alternativ zur Reinigung verwendet werden.

Eine bevorzugte Weiterbildung der vorliegenden Erfindung sieht vor, dass das Reinigungselement eine dekorative Umrissform und/oder eine dekorative Oberfläche aufweist. Hier bieten sich ansprechende und witzige Gestaltungsmöglichkeiten. Gemäß der vorliegenden Erfindung kann beispielsweise das Reinigungselement in der Form und Oberfläche einem Tier, einem Körperteil eines Tiers, einer Pflanze oder einem Gegenstand nachgebildet sein. Es kann aber auch eine streng geometrische Umrissform haben, beispielsweise kreisförmig, rechteckig etc. Bei einer solchen dekorativen Ausbildung des Reinigungselements ist dieses nicht rein zweckgebunden, sondern erfüllt zusätzlich noch eine dekorative Funktion. Beispielsweise kann ein solches individuell gestaltetes Reinigungselement auch als ein den Inhaber des Geräts identifizierender persönlicher Anhänger oder eine Art Maskottchen dienen.

Gemäß einer Weiterbildung könnte man auch die Verbindung zwischen Befestigungselement und Verbindungselement oder Befestigungselement und Reinigungselement lösbar gestalten, so dass man nur das Reinigungselement oder das Verbindungselement mit dem Reinigungselement von dem Befestigungselement abnehmen kann. Man könnte dann entweder nur das Befestigungselement in den Steckeingang einstecken und so beispielsweise als Staubschutz für die Stecköffnung nutzen und diese damit verschließen. Oder aber man befestigt ein anderes Accessoire für das elektronische Gerät über das Verbindungselement an dem Befestigungselement, wodurch sich für dieses quasi die gleichen Vorteile ergeben wie für das Reinigungselement. Wenn das Verbindungselement eine Schnur, ein Gummi oder eine Kordel ist, kann man dieses leicht von dem Befestigungselement lösen.

Die in den Unteransprüchen beschriebenen Merkmale betreffen bevorzugte Weiterbildungen der erfindungsgemäßen Aufgabenlösung. Weitere Vorteile der vorliegenden Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher erläutert. Dabei zeigen:
Figur 1 eine schematisch vereinfachte perspektivische Ansicht einer ersten beispielhaften erfindungsgemäßen Ausführungsvariante der Reinigungsvorrichtung bei der Anwendung;
Figur 2 eine weitere perspektivische Ansicht einer Reinigungsvorrichtung gemäß Figur 1;
Figur 3 eine schematische Seitenansicht eines elektronischen Geräts zur Erläuterung der Anbringung des Steckverbinders gemäß der vorliegenden Erfindung;
Figur 4 eine ähnliche Ansicht wie in Figur 3, jedoch als perspektivische Darstellung;
Figuren 5 a und 5 b jeweils eine Vorderansicht und eine Seitenansicht einer beispielhaften Reinigungsvorrichtung gemäß der Erfindung ohne das Befestigungselement;
Figuren 6 a und 6 b jeweils eine Vorderansicht und eine Seitenansicht einer alternativen beispielhaften Reinigungsvorrichtung gemäß der Erfindung ohne das Befestigungselement;
Figur 7 eine perspektivische Ansicht eines weiteren alternativen Ausführungsbeispiels einer erfindungsgemäßen Reinigungsvorrichtung bei der Anwendung.

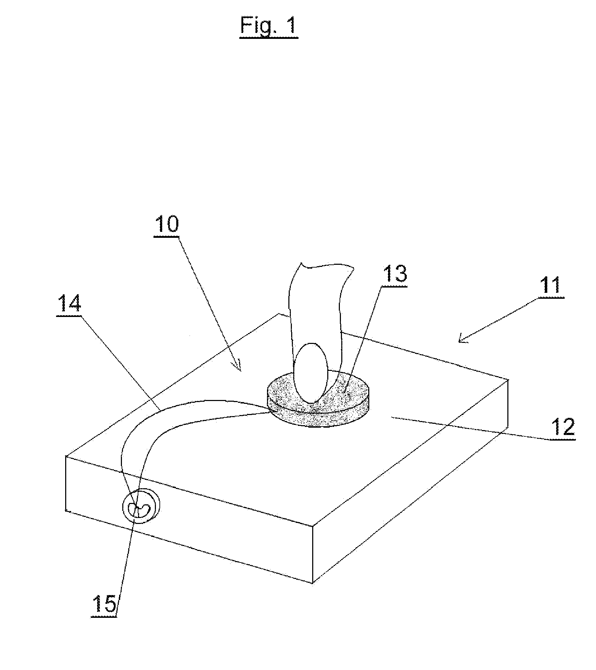

Es wird zunächst auf Figur 1 Bezug genommen, die eine schematisch vereinfachte perspektivische Ansicht einer ersten beispielhaften erfindungsgemäßen Ausführungsvariante der Reinigungsvorrichtung 10 bei der Anwendung zeigt. Es ist stark schematisch vereinfacht ein Mobilfunkgerät 11 dargestellt, dessen Bildschirmoberfläche 12 mittels eines weichen pad-artigen Reinigungselements 13 gereinigt wird. Die Reinigungsvorrichtung umfasst dieses Reinigungselement 13, welches über eine Schnur 14 an einem Steckverbinder 15 angebracht ist, der wiederum in eine an dem Mobilfunkgerät 11 angebrachte Steckbuchse eingesteckt ist, um die lösbare Verbindung mit diesem Gerät herzustellen. Somit ist die erfindungsgemäße Reinigungsvorrichtung während des Gebrauchs und ggf. auch danach mit dem Mobilfunkgerät unverlierbar verbunden, jedoch kann durch einfaches Herausziehen des Steckverbinders 15 aus der Steckbuchse des Geräts die Verbindung gelöst werden.

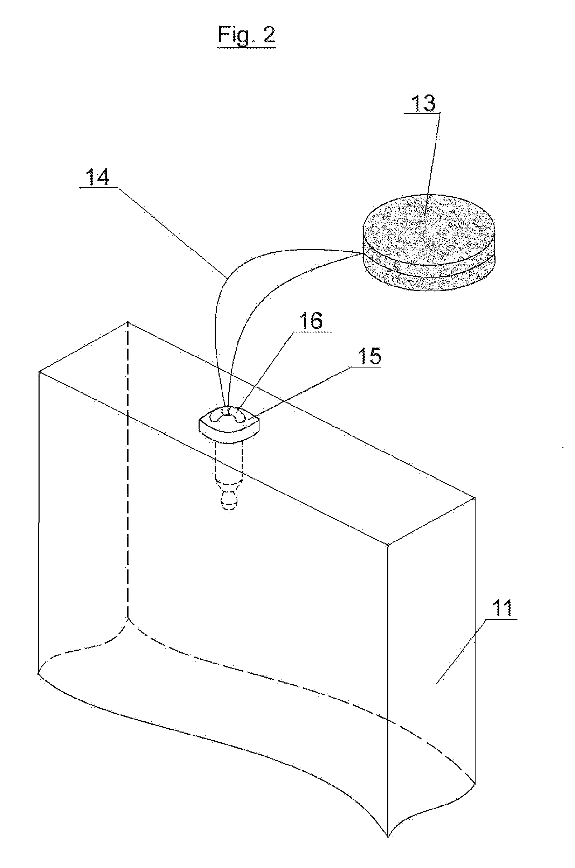

Aus Figur 2 ist ersichtlich, dass der Steckverbinder 15 an seinem im eingesteckten Zustand etwas vorstehenden oberen Ende eine Öse 16 oder dergleichen aufweist, an der die Schnur 14 befestigt werden kann, die die Verbindung zwischen dem Steckverbinder 15 und dem Reinigungselement 13 darstellt. Das Reinigungspad 13 kann aus einem weichen textilen Material hergestellt sein und kann vorderseitig sowie rückseitig gleichartig ausgebildet sein, so dass man es beidseitig benutzen kann. Das Reinigungspad 13 hängt wie man sieht am anderen Ende der Schnur 14. Alternativ kann beispielsweise auch anstelle einer Schnur ein Gummi oder dergleichen verwendet werden, was den Vorteil hat, dass die Reichweite bei Zugausübung vergrößert werden kann.

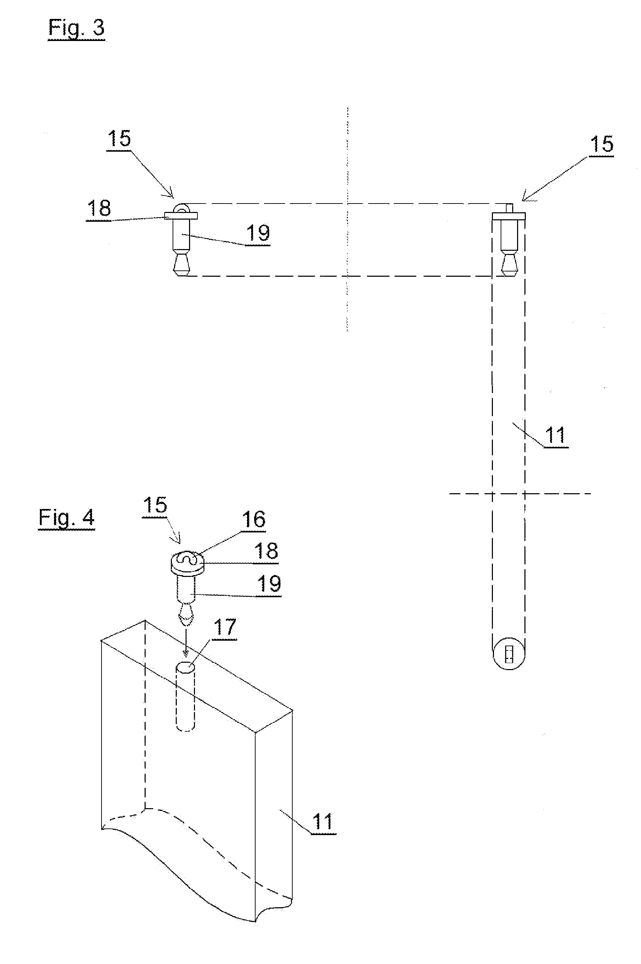

Nachfolgend wird auf die Figuren 3 und 4 Bezug genommen, aus denen die Ausbildung des als Steckverbinder 15 ausgebildeten Befestigungselements besser ersichtlich ist. In Figur 4 ist die Steckbuchse 17 schematisch angedeutet, in die der Steckverbinder 15 eingesteckt werden kann. Diese Steckbuchse 17 kann beispielsweise ein Kopfhörereingang oder ein Eingang für ein Ladegerät an einem Mobilfunkgerät sein oder ähnliches. In dem Beispiel ist der Steckverbinder 15 als eine Art Klinkenstecker ausgebildet, der sich nach Einführen in die Steckbuchse sicher dort verankern lässt, wobei eine Rast- und/oder Klemmverbindung entsteht. Bei entsprechender Ausübung einer Zugkraft und Überwindung eines kleinen Widerstands lässt sich der Steckverbinder 15 dann wieder aus der Steckbuchse entfernen. Der Vorteil besteht darin, dass an dem Mobilfunkgerät keine bauliche Veränderung notwendig ist, wenn ohnehin eine solche Steckbuchse für einen Klinkenstecker vorhanden ist. Alternativ kann man aber beispielsweise auch einen USB-Anschluss verwenden, wenn keine Buchse für Klinkenstecker an dem Gerät vorgesehen ist.

Die Öse 16 befindet sich wie man sieht an einer Art Kopfplatte 18 des Steckverbinders 15, der unter der Kopfplatte 18 einen zylindrischen Abschnitt 19 aufweist, der von der Aufnahmeöffnung der Steckbuchse 17 aufgenommen wird. Die Kopfplatte kann beim Einstecken außerhalb der Öffnung verbleiben. Figur 3 zeigt den vorgenannten Steckverbinder 15 einmal für sich (linke Darstellung) und einmal im eingesteckten Zustand in der Steckbuchse 17 des Mobilfunkgeräts 11.

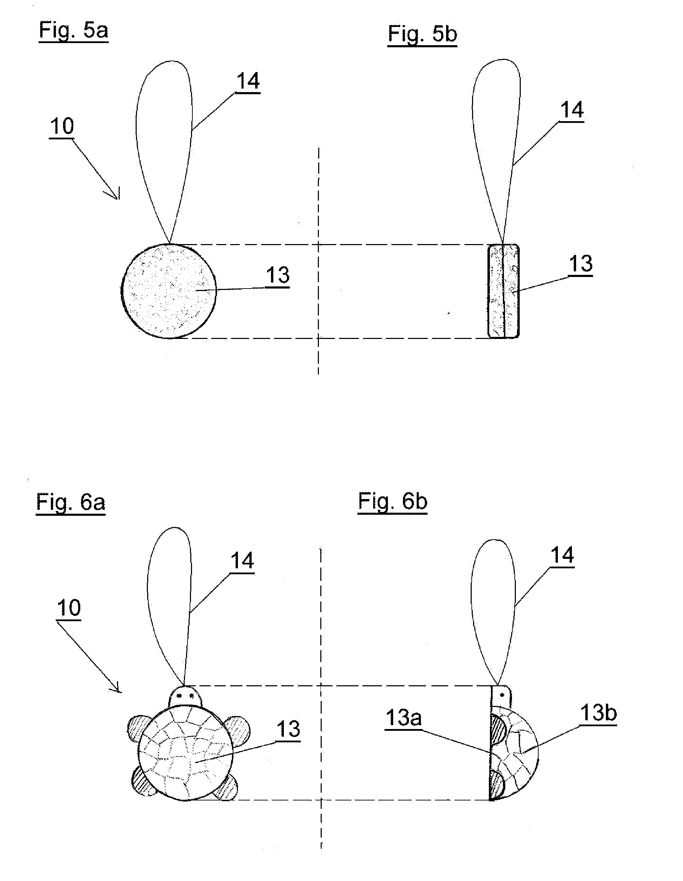

Nachfolgend wird unter Bezugnahme auf die Figuren 5 a und 5 b eine erste beispielhafte Ausführungsvariante einer erfindungsgemäßen Reinigungsvorrichtung 10 beschrieben, wobei hier nur das Reinigungselement 13 mit der Schnur 14 dargestellt ist. Im einfachsten Fall hat das Reinigungselement 13 eine einfache geometrische Grundform, ist beispielsweise zylindrisch scheibenförmig wie hier dargestellt, wobei die Vorderseite und die Rückseite beide gleich ausgestaltet sind und jeweils aus einem textilen weichen Material oder einem Vliesmaterial bestehen, welches eine weiche Reinigungsoberfläche aufweist und in sich flexibel ist.

Die Figuren 6 a und 6 b zeigen eine zweite Ausführungsvariante einer erfindungsgemäßen Reinigungsvorrichtung 10, bei der das Reinigungselement 13 dekorativ gestaltet und beispielsweise einer Schildkröte nachgebildet ist. Das Reinigungselement 13 hat wie Figur 6b zeigt eine flache Unterseite 13 a, die eine weiche Reinigungsoberfläche bildet und eine teilkugelförmige Oberseite 13 b, die ebenfalls aus einem weichen textilen Material bestehen kann und die ebenfalls zur Reinigung der Bildschirmoberfläche dienen kann. Das Reinigungselement 13 kann beispielsweise durch Nähen aus einem geeigneten textilen Material hergestellt werden. Alternativ kann das Reinigungselement beispielsweise auch hergestellt werden aus mehreren Teilelementen durch Kleben. Das weiche textile Material für die Reinigungsfläche kann beispielsweise aus Mikrofaser bestehen.

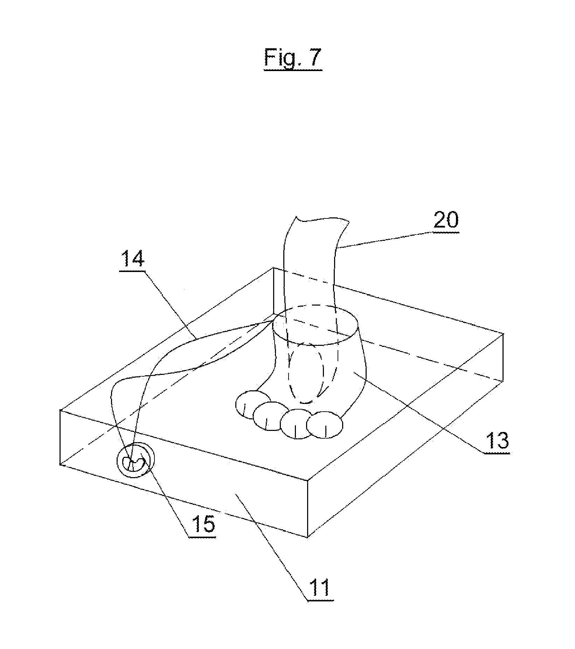

Figur 7 zeigt ein weiteres Ausführungsbeispiel der vorliegenden Erfindung in perspektivischer Ansicht. Bei dieser Variante ist das Reinigungselement 13 der ansonsten nur teilweise dargestellten Reinigungsvorrichtung wiederum dekorativ ausgestaltet, nämlich in Form einer Tierpfote. Dies erzeugt einen witzigen Eindruck, da der Benutzer quasi mit der Unterseite der Tierpfote, die aus weichem, insbesondere textilem, Material besteht die Oberfläche des Bildschirms reinigt. Die Tierpfote ist an dem der als Pfote ausgebildeten Reinigungsfläche gegenüberliegenden Ende offen ausgebildet, so dass ein Hohlraum im Inneren der Pfote zugänglich ist und man dort einen Finger 20 einführen kann, um auf diese Weise das Reinigungselement 13 auf dem Bildschirm hin und her zu bewegen und diesen zu putzen. Auch hier ist das Pad-artige Reinigungselement 13 über eine Schnur 14 oder ein Gummi mit dem Befestigungselement 15 verbunden. Letzteres ist als Steckverbinder ausgebildet und in eine Steckbuchse am Gerät 11 eingesteckt.

### Bezugszeichenliste

- 10: Reinigungsvorrichtung
- 11: elektronisches Gerät
- 12: Bildschirmoberfläche
- 13: Reinigungselement
- 14: Schnur
- 15: Steckverbinder
- 16: Öse
- 17: Steckbuchse
- 18: Kopfplatte
- 19: zylindrischer Abschnitt
- 20: Finger

## Patentansprüche

1. Reinigungsvorrichtung für einen Bildschirm eines elektronischen Geräts, wie beispielsweise eines Mobiltelefons, eines Kleincomputers oder dergleichen, umfassend ein Reinigungselement mit wenigstens einer Reinigungsschicht, ein Befestigungselement zur Anbringung an dem elektronischen Gerät und ein Verbindungselement, welches Reinigungselement und Befestigungselement miteinander verbindet,
**dadurch gekennzeichnet, dass** als Befestigungselement ein Steckverbinder (15) vorgesehen ist, geeignet zum lösbaren Einstecken in eine am elektronischen Gerät (11) vorhandene Stecköffnung.

2. Reinigungsvorrichtung für einen Bildschirm nach Anspruch 1,
**dadurch gekennzeichnet, dass** die Stecköffnung (17) am elektronischen Gerät (11) eine an diesem serienmäßig vorhandene Stecköffnung ist.

3. Reinigungsvorrichtung für einen Bildschirm nach Anspruch 1 oder 2,
**dadurch gekennzeichnet, dass** die Stecköffnung an dem elektronischen Gerät eine Steckbuchse (17) für einen Audio-Stecker, eine Steckbuchse für ein Kabel eines Ladegeräts, eine Steckbuchse für ein Kabel eines anderen an das elektronische Gerät anschließbaren elektrischen oder elektronischen Zubehörgeräts, eine USB-Steckbuchse oder dergleichen ist.

4. Reinigungsvorrichtung für einen Bildschirm nach einem der Ansprüche 1 bis 3,
**dadurch gekennzeichnet, dass** der als Befestigungselement vorgesehene Steckverbinder (15) rastend oder klemmend in einer Steckbuchse (17) des elektronischen Geräts (11) festlegbar ist.

5. Reinigungsvorrichtung für einen Bildschirm nach einem der Ansprüche 1 bis 4,
**dadurch gekennzeichnet, dass** für die Verbindung zwischen Befestigungselement (15) und Reinigungselement (13) ein schnurartiges oder kordelartiges Verbindungselement (14) vorgesehen ist.

6. Reinigungsvorrichtung für einen Bildschirm nach einem der Ansprüche 1 bis 5,
**dadurch gekennzeichnet, dass** das Reinigungselement (13) eine weiche textile Reinigungsoberfläche an einem flexiblen Träger aufweist, welcher ebenfalls aus einem textilen Material gefertigt ist.

7. Reinigungsvorrichtung für einen Bildschirm nach Anspruch 6,
**dadurch gekennzeichnet, dass** die textile Reinigungsoberfläche und der textile flexible Träger einstückig aus einem textilen Material gefertigt, vorzugsweise genäht sind.

8. Reinigungsvorrichtung für einen Bildschirm nach einem der Ansprüche 1 bis 7,
**dadurch gekennzeichnet, dass** das Reinigungselement (13) eine dekorative Umrissform und/oder eine dekorative Oberfläche aufweist.

9. Reinigungsvorrichtung für einen Bildschirm nach Anspruch 8, **dadurch gekennzeichnet, dass** das Reinigungselement (13) in der Form und Oberfläche einem Tier, einem Körperteil eines Tiers, einer Pflanze oder einem Gegenstand nachgebildet ist.
